Europäisches Patentamt

(19) European Patent Office

Office européen des brevets

(11) Publication number: **0 461 868 A2**

## (12) EUROPEAN PATENT APPLICATION

(21) Application number: **91305282.5**

(22) Date of filing: **12.06.91**

(51) Int. Cl.⁵: **B32B 27/08, B65D 77/20**

(30) Priority: **12.06.90 US 536513**

(43) Date of publication of application:
**18.12.91 Bulletin 91/51**

(84) Designated Contracting States:
**DE FR GB IT**

(71) Applicant: **MINNESOTA MINING AND
MANUFACTURING COMPANY
3M Center, P.O. Box 33427
St. Paul, Minnesota 55133-3427 (US)**

(72) Inventor: **Han, Hak-Rhim, c/o Minnesota
Mining and
Manufact. Co., 2501 Hudson Road, P.O. Box
33427
St. Paul, Minnesota 55133-3427 (US)**
Inventor: **Christensen, Leif, c/o Minnesota
Mining and
Manufact. Co., 2501 Hudson Road, P.O. Box
33427
St. Paul, Minnesota 55133-3427 (US)**
Inventor: **LePere, Pierre H., c/o Minnesota
Mining and
Manufact. Co., 2501 Hudson Road, P.O. Box
33427
St. Paul, Minnesota 55133-3427 (US)**

(74) Representative: **Baillie, Iain Cameron et al
c/o Ladas & Parry Isartorplatz 5
W-8000 München 2 (DE)**

(54) Innerseal that can be applied by microwave energy.

(57) Innerseal comprising a heat-sealable layer, wherein heating by microwave energy is employed to soften the heat-sealable layer, thereby allowing it to be bonded to the lip of a container. Innerseals of this invention require a layer of polymeric material capable of being heat-sealed to the lip of a container and a layer formed of material capable of absorbing microwave energy, converting that energy to heat, and transferring that energy, either directly or indirectly, to the layer of heat-sealable polymeric material.

Fig. 2

EP 0 461 868 A2

EP 0 461 868 A2

1. Field of the Invention

This invention relates to innerseals for containers, and, more particularly, innerseals that can be applied to containers by means of microwave energy. The invention also relates to a method for forming polypyrrole coatings and to susceptors of microwave energy made therefrom.

2. Discussion of the Art

Heat-sealable innerseals have been found to be useful in sealing containers for liquid products, such as, for example, motor oil, brake fluid, antifreeze, household ammonia, liquid detergents, etc., which products present technical problems with respect to leakage. Heat-sealable innerseals have also become popular for providing the tamper-resistant innerseals that are required by the Food and Drug Administration for over-the-counter drugs.

Heat-sealable innerseals generally comprise a layer of aluminum foil bearing a coating of heat-sealable material thereon. The innerseals are inserted into caps, and the resulting assemblies are then supplied to the packager. The cap is then placed by the packager onto the filled container, with the coating of heat-sealable material being in contact with the lip or rim of the container. The container then passes under an induction heater which generates heat through the aluminum foil, thereby melting the heat-sealable coating, and causing the innerseal to bond to the container.

Heat-sealable innerseals applied by induction heating have been found to be especially useful with plastic caps and plastic container systems, as induction heating does not heat the plastic material excessively. Heat-sealable innerseals can also be used with metal caps in an induction heating system where the metal cap itself conducts heat to melt the heat-sealable material.

Although heat-sealable innerseals are useful and convenient, the aluminum foil is costly and contributes much to the cost of the innerseal. Elimination of the aluminum foil is desired to reduce the cost of the innerseal.

Summary of the Invention

This invention provides innerseals comprising a heat-sealable layer, wherein heating by microwave energy is employed to soften the heat-sealable layer, thereby allowing it to be bonded to the lip of a container.

At the very least, innerseals of this invention require a layer of polymeric material capable of being heat-sealed to the lip of a container and a layer formed of material capable of absorbing microwave energy, converting that energy to heat, and transferring that energy, either directly or indirectly, to the layer of heat-sealable polymeric material. Microwave energy is taken to include electromagnetic waves over a frequency range of 300 Mhz to 10,000 Mhz. For commercial reasons, however, additional layers of various types of material are typically included in the innerseal constructions of this invention.

In one embodiment, the innerseal comprises, from top to bottom:

(a) a liner, preferably made of paperboard or pulpboard, capable of absorbing microwave energy, converting that energy to heat, and transferring that energy to a layer of polymeric material capable of being heat-sealed to a container;

(b) a layer of wax;

(c) a layer of polymeric film, preferably polyester film; and

(d) a layer of polymeric material capable of being heat-sealed to a container.

In another embodiment, the innerseal comprises, from top to bottom:

(a) a liner, preferably made of a paper sheet, capable of absorbing microwave energy, converting that energy to heat, and transferring that energy to a layer of polymeric material capable of being heat-sealed to a container; and

(b) a layer of polymeric material capable of being heat-sealed to a container.

In this embodiment, a layer of polymeric film, preferably polyester film, can optionally be laminated to the liner made of paper sheet by a layer of adhesive, such that the polymeric film is interposed between the paper sheet and the heat-sealable layer.

In still another embodiment, the innerseal comprises, from top to bottom:

(a) a layer made of polymeric material capable of absorbing microwave energy, converting that energy to heat, and transferring that energy to a layer of polymeric material capable of being heat-sealed to a container;

(b) a layer of polymeric film, preferably polyester film; and

(c) a layer of polymeric material capable of being heat-sealed to a container.

In this embodiment, an optional layer of polymeric film, polymeric foam, or paper can be laminated by a layer

2

of adhesive to the exposed surface of the layer of polymeric material capable of absorbing microwave energy, converting said energy to heat, and transferring that energy to a layer of polymeric material capable of being heat-sealed to a container. In an alternative of this embodiment, layer (a) and layer (b) can be inverted, such that the top layer is a layer of polymeric film and the intermediate layer is a layer of polymeric material capable of absorbing microwave energy, converting that energy to heat, and transferring that energy to a layer of polymeric material capable of being heat-sealed to a container.

In the first embodiment, liner (a) absorbs energy and transfers it to layers (b), (c), and (d), thereby melting layer (d) and bonding it to the lip of the container. In the second embodiment, liner (a) absorbs energy, transfers it to heat-sealable layer (b) thereby melting heat-sealable layer (b) and bonding it to the lip of the container. In the third embodiment, layer of polymeric material (a) absorbs energy, transfers it to heat-sealable layer (c), thereby melting heat-sealable layer (c) and bonding it to the lip of the container.

Regardless of the construction of the innerseal, it cannot contain a layer of any material that is known to shield microwave energy. The innerseals of this invention make it possible to eliminate aluminum foil from innerseals, thereby resulting in reduced cost of the innerseals.

This invention also provides a method for applying to a substrate a layer of a polymeric material capable of absorbing microwave energy and converting that energy to heat. This method results in very thin polymeric layers of high uniformity, excellent adhesion, and excellent conductivity, thereby rendering the polymeric layer suitable for absorbing microwave energy. The method comprises the steps of (1) coating onto a substrate, at low temperature, a solution of (a) a monomer suitable for preparing a polymer capable of absorbing microwave energy and converting that energy to heat, and (b) an oxidant/dopant in an organic or aqueous organic solvent, allowing the wet coating to reach ambient temperature to form a polymeric coating, rinsing the resulting coating with water, and allowing the coating to dry. The method can be carried out by means of conventional coating apparatus on a continuous basis. The invention also provides materials coated by the method. The coated materials exhibit anti-static as well as conductive properties.

The invention also provides a composite capable of absorbing microwave energy and comprising a dielectric substrate that is substantially transparent to microwave energy and a thin layer of electrically conductive, doped polypyrrole.

Brief Description of the Drawings

FIG. 1 is a greatly enlarged cross section of one embodiment of an innerseal made in accordance with this invention.

FIG. 2 is a vertical sectional view of a cap and innerseal constructed in accordance with the present invention. In this drawing, the innerseal is sealed to a container.

FIG. 3 is a greatly enlarged cross section of another embodiment of an innerseal made in accordance with this invention.

FIG. 4 is a greatly enlarged cross section of a third embodiment of an innerseal made in accordance with this invention.

FIG. 5 is a graph showing the heat output of a "Qwik Crisp"™ Board manufactured by James River Corporation.

FIG. 6 is a graph comparing the effect of heat aging on heat output of microwave absorbing composites made in accordance with this invention and a microwave absorbing composite of the prior art.

FIG. 7 is a graph showing the effect of heat aging on conductivity of microwave absorbing composites made in accordance with this invention.

FIG. 8 is a graph showing the effect of heat aging on heat output of microwave absorbing composites made in accordance with this invention.

Detailed Description

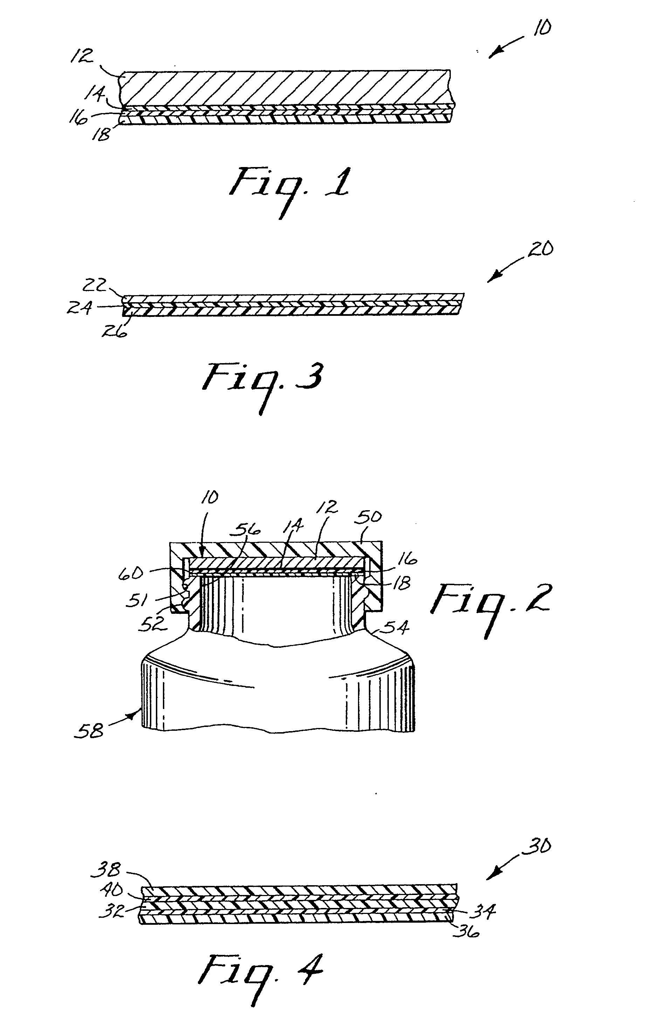

Referring to FIG. 1, innerseal 10 comprises from top to bottom a liner 12, a layer of wax 14, a polymeric film 16, and a heat-sealable layer 18.

In the embodiment of FIG. 1, liner 12 is preferably made of pulpboard. Pulpboard liner 12 need not be greater than about 1,500 micrometers thick, and is preferably between about 125 and about 1,000 micrometers thick. An example thereof is 875 micrometer white lined pulpboard. Other examples of liners suitable for the innerseal of this invention include carbon-black loaded pulpboard, or the like. One of the purposes of liner 12 is to absorb microwave energy and convert that energy to heat for subsequent transfer to heat-sealable layer 18. Other purposes of liner 12 are to enhance the degree of contact between heat-sealable layer 18 and the lip of a container prior to subjecting the innerseal to microwave energy and to serve as a seal after heat-sealable layer 18 is destroyed by the consumer.

In the embodiment of FIG. 1, a layer of wax 14 is in contact with liner 12. As used herein, the term "wax" also includes wax derivatives and low tack, low molecular weight adhesives. Wax layer 14 is typically less than about 100 micrometers thick, and preferably about 25 micrometers thick. Representative examples of commercially available paraffin waxes suitable for wax layer 14 include P-127, P-137, P-167, P-155 (commercially available from Sun Oil Company), "Shellwax" 200, "Shellwax" 270 (commercially available from Shell Chemical Co.), paraffin 133/135 (commercially available from Quaker State Oil Co.). Representative examples of microcrystalline waxes suitable for wax layer 14 include $B^2$ - 175, $B^2$ - 185 (commercially available from Bareco), "Multiwax" W-835 (commercially available from Witco Chemical Co.). Other waxes that are useful for this invention are well-known in the art and are described, for example, in U.S. Patent No. 4,579,240, incorporated herein by reference. The purpose of wax layer 14 is to provide a temporary seal between liner 12 and polymeric film 16. Upon absorption of microwave energy by liner 12, the wax in layer 14 melts and is absorbed by liner 12, thereby eliminating the temporary seal between liner 12 and polymeric film 16.

In the embodiment of FIG. 1, a layer of polymeric film 16 is disposed between layer of wax 14 and heat-sealable layer 18. The purpose of layer of polymeric film 16 is to provide reinforcement to heat-sealable layer 18. Materials suitable for polymeric film 16 include polyesters, polyamides, polyimides, and polycarbonates. The thickness of layer 16 preferably ranges from 12.5 to 25 micrometers.

Heat-sealable layer 18, which bonds innerseal 10 to the lip of the container, can be made of any heat-sealable polymer. Polymeric film suitable for heat-sealable layer 18 need not be greater than about 150 micrometers thick, and is preferably from about 12.5 to about 62.5 micrometers thick. Representative examples of polymeric materials suitable for layer 18 include polyethylene, e.g., low density polyethylene, linear low density polyethylene, medium density polyethylene, ethylene/vinyl acetate copolymer, and heat-sealable polyesters. The material for heat-sealable layer 18 must be selected so that it will readily bond to the material forming the lip of the container.

The combination of the various sheets and layers in the embodiment of FIG. 1 represents only one specific construction. To illustrate, polymeric layer 16 may be prelaminated to a sheet of paper, pulpboard liner 12 may be prelaminated to a polyester film, etc. Also, there may be a polymeric film or paper, overlying layer 16 to provide for increased adhesion, to increase the ability to detect tampering, to increase web rigidity for ease of handling during coating operations, or for other purposes. However, it is necessary that the innerseal of this embodiment and of any other embodiment avoid the use of any layer, such as aluminum foil, that acts as a shield to microwave energy. The innerseal embodied in FIG. 1 can be used in any container that would typically use a heat-sealable layer and a pulpboard liner.

Embodiments that dispense with both a pulpboard liner and wax layer are also within the scope of this invention.

In the embodiment of FIG. 3, innerseal 20 comprises from top to bottom, a liner 22 capable of absorbing microwave energy and converting that energy to heat, a layer 24 of laminating adhesive, and a heat-sealable layer 26. Layer 24 is not required if heat-sealable layer 26 can be applied directly to liner 22.

In the embodiment of FIG. 3, liner 22 can be made of paper, chipboard, or a microwave susceptor, e.g., paper loaded with carbon black, polymeric film bearing vapor-deposited aluminum. Conventional microwave absorbing composites typically consist of polyethylene terephthalate (PET) film coated with aluminum, by means of vapor coating, or coated with stainless steel, by means of sputter coating. It is preferred that liner 22, if made of paper, have a thickness of 100 to 250 micrometers. If liner 22 provides sufficient reinforcement to heat-sealable layer 26, a layer of polymeric film analogous to layer 16 of FIG. 1 is not necessary. However, such a layer can be used if desired. If used, it can be made from the same materials as the materials suitable for preparing layer 16 of the embodiment of FIG. 1 and can have the same physical characteristics as layer 16. Materials suitable for heat-sealable layer 26 and the physical characteristics of heat-sealable layer 26 can be the same as those for layer 18 in the embodiment of FIG. 1. Laminating adhesives suitable for layer 24 are well-known in the art. A commercially available laminating adhesive suitable for layer 24 is a polyester/polyurethane adhesive having the trademark "Adcote" 503A, available from Morton Chemical Company. The coating weight of the adhesion layer preferably ranges from about 1 to 10 grains per 24 sq. in.

In the embodiment of FIG. 4, innerseal 30 comprises from top to bottom, a layer of polymeric film 32 capable of absorbing microwave energy and converting that energy to heat, a layer of polymeric film 34, preferably polyester film, and a heat-sealable layer 36. Optionally, a layer of polymeric foam or polymeric film 38 can be laminated to the exposed surface of the layer 40 of polymeric film 32 by means of a layer 40 of laminating adhesive. The thickness of layer 32 preferably ranges from about 0.01 to 0.4 micrometer. Polymeric materials suitable for layer 32 include polypyrrole, polyanilines, and polythiophenes. Layer of polymeric film 34 provides reinforcement to heat-sealable layer 38. Materials for and physical characteristics of layer 34 can be the same as those for materials for preparing layer 16 in the embodiment of FIG. 1. Materials suitable for heat-sealable

4

layer 38 and the physical characteristics of heat-sealable layer 38 can be the same as those for layer 18 in the embodiment of FIG. 1. In an alternative of this embodiment, layer 32 and layer 34 can be switched (not shown).

The thickness of heat-sealable layers 26 and 36 can be the same as that of heat-sealable layer 18. The thickness of polymeric film layer 34 and the optional polymeric film layer of the embodiment of FIG. 3 can be the same as that of polymeric film layer 16.

A material capable of absorbing microwave energy is preferably incorporated into heat-sealable layer 18, heat-sealable layer 26, heat-sealable layer 38. This material increases the rate at which microwave energy is absorbed by the innerseal. Such materials, which are known as microwave energy sensitizers, are described in detail in U.S. Patent No. 4,360,607, incorporated herein by reference. Representative examples of such materials are described in Example 1 of U.S. Patent No. 4,360,607. Representative examples of commercially available microwave energy sensitizers include "Frequon" B-20 and "Frequon" B-31, available from Struktol Co. Levels of concentration of "Frequon" B-20 and "Frequon" B-31 sensitizers preferably range from 4% by weight to 15% by weight of the heat-sealable layer.

It is important that the innerseals of this invention have no layers that would act as a shield to microwave energy. For example, a layer of aluminum foil cannot be used in the innerseals of this invention.

Webs for preparing the types of innerseals shown in FIG. 1 and FIG. 3 can be prepared by conventional means. In order to prepare the type of innerseal shown in FIG. 1, polymeric material for preparing heat-sealable layer 18 can be coated onto polymeric sheet for preparing layer 16 by conventional means, such as, for example, extrusion coating. Coating weights of the polymeric material of heat-sealable layer 18 should be at least about six grams per square meter. Preferably, the coating weights are from about 19 to about 45 grams per square meter. A layer of wax can then be coated over the sheet for preparing layer 16 by conventional means. The wax-coated surface can then be placed in contact with the surface of pulpboard sheet for preparing liner 12 and passed through squeeze rolls at elevated temperature, thereby laminating the material for heat-sealable layer 18, the sheets for polymeric layer 16, and wax layer 14 to the sheet for pulpboard liner 12 while leaving one major surface of heat-sealable layer 18 exposed. The resulting innerseal construction can then be slit to suitable widths, from which circular discs, corresponding to the inner diameter of screw-on or snap-top lids, can be die cut.

In order to prepare the type of innerseal shown in FIG. 3, polymeric material for preparing heat-sealable layer 26 can be laminated to paper sheet for preparing layer 22 by means of a conventional laminating adhesive, e.g., "Adcote" 503A adhesive. If desired, polymeric film or polymeric foam can be laminated to paper sheet for preparing layer 22. The resulting innerseal construction can then be slit to suitable widths, from which circular discs, corresponding to the diameter of a container can be die cut.

Webs for preparing the type of innerseal shown in FIG. 4 can be prepared by a different method, not previously known. The method can be used to form an electrically conductive, doped polypyrrole coating by polymerizing a pyrrole monomer in the presence of an oxidant and at least one non-nucleophilic anion at very low temperatures. The non-nucleophilic anion is incorporated into the polymer as a dopant. According to this method, a solution containing an oxidant/dopant in an organic solvent or aqueous organic solvent is prepared; the solution is cooled, preferably by means of a dry ice bath, to a temperature sufficiently low such that the monomer for preparing the polymer capable of absorbing microwave energy will not polymerize prior to its being coated on a substrate; then the monomer for preparing the polymer capable of absorbing microwave energy is introduced to the cooled solution; next the resulting solution is coated onto a substrate. The temperature of the coating is then allowed to reach ambient temperature, whereupon a polymeric coating is formed. The coating is then washed with water to remove byproducts and allowed to dry.

The temperature of the coating solution must be sufficiently low such that the monomer for preparing the polymer capable of absorbing microwave energy will not polymerize prior to its being deposited on a substrate. Polymerization on the coated web or substrate can be carried out at temperatures of from about -20°C to about 70°C. Ambient temperatures are convenient because further heating or cooling will then not be required. At elevated temperatures, the polymerization reaction occurs very rapidly, e.g., in about 10 seconds. Polymerization at lower temperatures, e.g., from about -20°C to about 30°C, is preferred for very conductive coatings, such as would be required for microwave susceptors. In the case of the monomer for preparing polypyrrole, the coating solution should be kept below -25°C, preferably below -40°C. Pyrrole, in the presence of an oxidant, begins to polymerize slowly at -40°C and polymerizes more rapidly as the temperature is increased.

Monomers suitable for preparing polypyrrole include, but are not limited to, pyrrole, 3-substituted pyrrole, 3,4-disubstituted pyrrole, N-substituted pyrrole, and mixtures thereof, where said substituents are chosen from alkyl groups or aryl groups. Alkyl groups can be linear or branched moieties having up to 12 carbon atoms, and optionally containing up to two heteroatoms selected from the group consisting of oxygen, nitrogen, and sulfur.

Organic solvents suitable for the coating solution include aliphatic alcohols having up to and including six carbon atoms, e.g., methanol, ethanol. Organic solvents may contain up to 30% by volume water. Other organic solvents useful for the coating solution include 1,3 dioxolane, tetrahydrofuran, and diethylether.

Oxidant/dopants suitable for the coating solution include a salt of a cationic oxidant, such as, for example, $(C_6H_5)_3C^+$, $Fe^{+3}$, $Cu^{+2}$, $Ce^{+4}$, in combination with a non-nucleophilic anion, e.g., a salt of a strong inorganic acid, such as $FeCl_3$, or $Fe(ClO_4)_3$, a salt of an organic mono-or di-sulfonic acid, such as p-toluenesulfonic acid. Alternatively, an organic sulfonic acid can be added to the solution in addition to the monomer and oxidant. Other oxidants that can be used in this process include peroxy acids and their salts. The concentration of oxidant/dopant can vary, with the upper limit determined by the solubility of the oxidant/dopant at the selected temperature. The oxidant/dopant can comprise a mixture of an oxidant and dopant or a single material that functions as an oxidant and dopant.

Although the concentration of the oxidant/dopant in solvent can vary, the preferred range of concentrations of the oxidant/dopant in solvent is 2% to 40% by weight.

The concentration of monomer is determined by the oxidative equivalent of the oxidant, the preferred ratio of oxidant to monomer being approximately 2.2:1 on a molar basis. The duration of polymerization prior to the rinse can range from 20 seconds to four minutes.

The method of this invention can be controlled to provide polymeric coatings capable of absorbing microwave energy and having high conductivity and low surface resistivity. Surface resistivities ranging from $10^{10}$ ohms/square to $10^2$ ohms/square can be obtained, with surface resistivities ranging from 200 to 10,000 ohms/square being preferred. Surface resistivity is conveniently measured by measuring the optical density of the polymeric coating. Optical densities ranging from 0.01 to 0.40 correspond to surface resistivities ranging from $10^{10}$ ohms/square to $10^2$ ohms/square. For example, in the case of coatings of polypyrrole, surface resistivity can range from about 600 to about 25,000 ohms/square. Thicker coatings can be made by coating successive layers of the monomer/oxidant mixture over previously polymerized layers.

With respect to innerseals, the substrate upon which the polymer is coated is preferably a polymeric film, such as, for example, a film made of a material such as polyolefin, e.g., polyethylene or polypropylene, polyester, polyimide, polycarbonate, and cellulosic.

The innerseals of this invention provide several advantages over innerseals utilizing aluminum foil. By eliminating aluminum foil, costs are reduced. Messages can be printed on polymeric films 16 and 34 if polymeric' films 16 and 34 are transparent or translucent. When the embodiment of FIG. 1 is used, the pulp liner can absorb all of the wax and not leave a residue of wax, which was common when aluminum foil was used.

The innerseals of this invention can be applied to containers in a conventional manner and can be sealed by means of exposure to microwave energy. Application of the innerseal of FIG. 1 to a container is shown in FIG. 2. Innerseal 10 is typically die cut from a web. Innerseal 10 is typically placed inside cap 50 by the cap manufacturer. Cap 50 is preferably formed of a polymer and has a top and connecting side walls with internal threads 51 to mate with threads 52 provided on the outer surface about neck 54 and opening 56 of container 58. Cap 50 could be a snap fitted cap to mate with a rib formed about the opening of the container, such as conventional child-proof caps having an arrow thereon which is rotated to match an arrow or location on the container, at which location the cap may be snapped off. The threaded cap is chosen for purposes of illustration. Caps are supplied to the packager with innerseal 10 already placed in cap 50. Typically, innerseal 10 is glued onto the inside of cap 50.

Innerseal 10 can be bonded to the lip 60 of container 58 by microwave heating. An apparatus suitable for providing microwave heating is described in U.S. Patent No. 4,839,494, incorporated herein by reference.

After container 58 has been filled, cap 50 is screwed onto the neck 54 of container 58, after which the capped container is passed through a microwave energy field, which results in heating liner 12 and simultaneously melting wax layer 14 and heat-sealable layer 18. As wax 14 melts, it is absorbed by pulpboard liner 12, greatly weakening the bond between liner 12 and layer 16. As the capped container cools to room temperature, layer 18 bonds firmly to lip 60 of container 58. When cap 50 is subsequently unscrewed from container 58, pulpboard liner 12 twists free from layer 16, which remains firmly bonded to lip 60 of container 58 by means of heat-sealable layer 18, thereby providing a tight seal which prevents leakage.

Innerseal 10 shown in FIG. 1 is substantially of the same size and configuration as opening 56 of container 58. Innerseal 10 can have a small tab (not shown) extending from the periphery thereof. However, the innerseal does not require a tab. If innerseal 10 has no tab, the ultimate consumer can puncture innerseal 10 with a finger or a tool and then remove it from container 58. If innerseal 10 has a tab, the ultimate consumer can grasp the tab and then peel innerseal 10 away from lip 60 of container 58.

While the previously described method of applying polypyrrole to a substrate has been primarily concerned with innerseals, it has also been discovered that substrates coated with polypyrrole by the method of this invention have uses of much greater scope.

Coated films made by this method are electrically conductive and are capable of absorbing microwave energy to generate heat. For example, a film bearing a polypyrrole coating that is capable of heating the surface of a 0.25 inch quartz plate adjacent to and in contact with the layer to a temperature of at least 500°F by means of microwave energy can be prepared by this method. The thickness of the coating can be varied to control the heat generating capability of the coated film.

Types of substrates that can be coated with a layer of polypyrrole by the method of this invention include polymeric films, woven materials (such as cloth), and nonwoven materials (such as paper, paperboard, webs of polymeric fibers, and the like). Polymeric films can be porous or nonporous and can be formed from such materials as polyolefins (e.g., polyethylene, polypropylene, ethylene acrylic acid, ethylene vinyl acetate, and the like), polyesters (e.g., polyethylene terephthalate), polyamides, polyimides, polyetherimides, polycarbonates, polyvinyl chlorides, polyvinylidene chlorides, cellulosics, and copolymers or blends thereof. Substrates can also be formed from glass and ceramics. The substrates can be primed with chemical primers or surface treated, for example, by electron beam treatment or corona treatment, to improve the adhesion of the polypyrrole coating to the substrate. Corona treatment is preferred for most substrates.

Materials that are particularly useful for the substrates of microwave absorbing composites utilizing layers of polypyrrole are dielectric substrates that are substantially transparent to microwave energy, e.g., ceramics and the polymeric materials previously described. As used herein, the phrase "microwave susceptor" or the term "susceptor" means a material capable of absorbing microwave energy and generating heat. The phrase "microwave absorbing composite" means an article comprising a substrate bearing a layer capable of absorbing microwave energy and generating heat. For microwave absorbing composites for the heating of food, the substrates should be chosen to be nontoxic and should preferably have a high heat distortion temperature, e.g., about 200°C. Particularly useful materials for preparing microwave absorbing composites for heating food include polyethylene terephthalate, ThermX™ polyester resin (available from Eastman Chemical Company), and Ultem® 1000 polyetherimide film (available from General Electric Company). Substrates can also be formed into desired objects, such as a dish, by methods such as thermoforming.

The polypyrrole layer can further be coated with a dielectric polymeric coating such as a polysiloxane, epoxy, polyester, or the like. Alternatively, a substrate bearing a polypyrrole coating can be laminated to a second film or to a paperboard or paper material, such as a paperboard serving dish or a popcorn bag. A polypyrrole coating on a thermoplastic substrate (such as, for example, polyethylene terephthalate, polycarbonate) is flexible.

For a microwave absorbing composite, the polypyrrole layer is preferably formed by the method described previously. The polypyrrole layer can also be formed by combining the oxidant/dopant with a binder, coating the combination onto the substrate, and passing the substrate over pyrrole vapors.

Microwave absorbing composites made according to the polymerization method of this invention exhibit improved properties when compared with conventional metallized microwave absorbing composites. The polymerized coatings are not constrained by the tight deposition tolerances that are required for preparing metallized microwave absorbing composites. Conventional microwave absorbing composites, e.g., aluminum coated onto polyethylene terephthalate film, generally have an optical density of between 0.18 and 0.30, corresponding to a surface resistivity of 40 to 400 ohms/square, corresponding to coating thicknesses on the order of 10 nm. At higher surface resistivities (lower optical densities), the heating capability of conventional microwave absorbing composites falls to zero, while at lower surface resistivities (higher optical densities), conventional microwave absorbing composites arc and are considered unacceptable on account of the possibility of generating fire. Moreover, reflection of microwave energy, rather than absorption of microwave energy, may occur with thicker metallic coatings. As a consequence, there is little variation possible in the heating capability of conventional microwave absorbing composites having metallic coatings.

Variation in heat output can be controlled over a broad range by controlling the thickness of the polymeric coating of the microwave absorbing composite. Thus, the heat output of polymerized coatings applied to a polyethylene terephthalate film that has been laminated to paperboard can have heat flux ranging from below 0.3 cal/cm$^2$-sec to above 1.2 cal/cm$^2$-sec in a 700 watt oven. Heat flux is defined as the amount of heat generated by the microwave absorbing composite in calories per square centimeter per second.

The microwave absorbing composite of the present invention can retain 65% of its original heat output after four minutes of microwave heating. This performance can be further improved if the polymeric coating of the microwave absorbing composite is applied to a substrate having greater temperature stability. During microwave heating, the heat output from a standard metallized microwave absorbing composite will be reduced to less than 30% within 20 seconds. An additional factor limiting the heating capability of conventional microwave absorbing composites is the minimal amount of metal present in the film, which results in high energy densities in the metallic layer, causing breaking up of the metallic layer of the microwave absorbing composite.

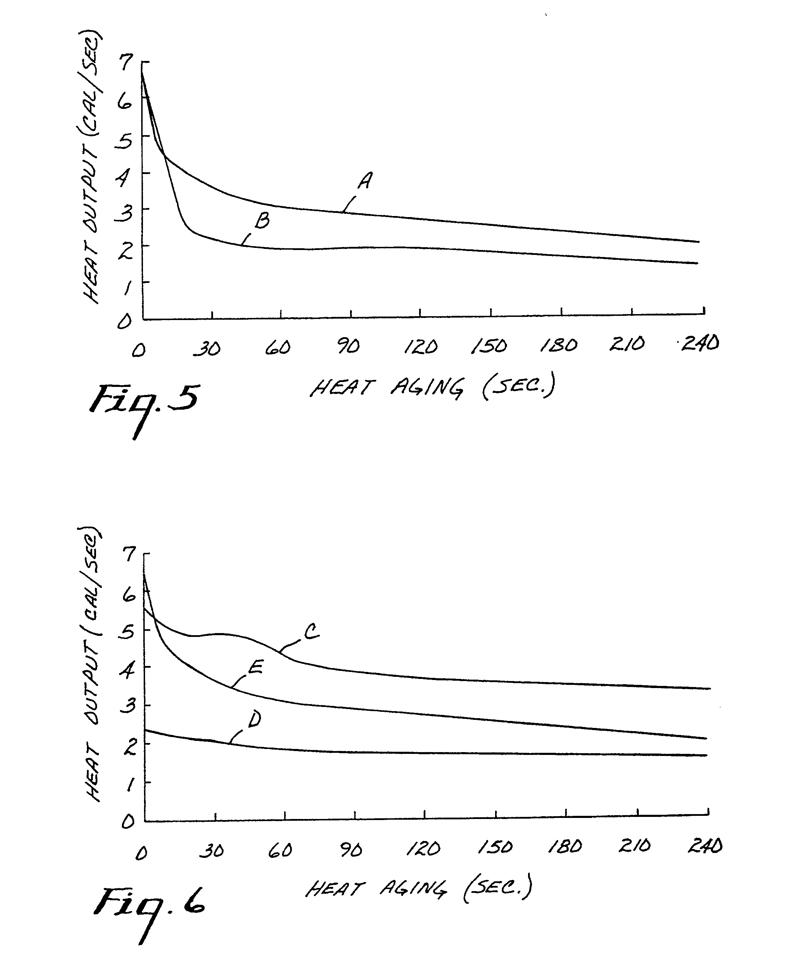

Furthermore, as polyethylene terephthalate film bearing a metallic susceptor is heated, it undergoes dimensional changes, with the result that the thin metallic coating breaks apart into small islands, thereby causing its electrical impedance to rise, significantly decreasing the ability of the microwave absorbing composite to convert microwave energy into heat. Accordingly, conventional microwave absorbing composites having metallic coatings demonstrate limited performance where locally high heat output, or high temperature, is required, such as, for example, in browning and crisping food. In FIG. 5, the data represented by the line designated A indicate the heat output of a conventional microwave absorbing composite as a function of heat aging under load. The data represented by the line designated B indicates the heat output of a conventional microwave absorbing composite as a function of heat aging under a non-load condition.

By replacing the polyethylene terephthalate film with a polymeric film having greater heat stability, the breaking up of the thin metallic coating upon exposure to microwave energy can be delayed. Thus, a higher heat flux can be sustained, and the microwave absorbing composite continues heating until very high temperatures are reached. Eventually, the polymeric film will melt, scorch, or otherwise be damaged. Such uncontrolled heating is termed "thermal runaway". Paperboard, which is an integral part of most food packaging, cannot withstand temperatures significantly in excess of 230°C. On the other hand, most foods require exposure to temperatures in excess of 160°C to undergo surface browning and crisping. Therefore, it is preferred that microwave absorbing composites for microwave cooking of food display temperature leveling or limitation between 160°C and 230°C.

"Thermal runaway" is not a problem with the microwave absorbing composite of the present invention. As the polymeric coating of the microwave absorbing composite reaches temperatures above 200°C it slowly becomes less conductive and more transparent to microwave energy. At a temperature of 300°C, the heat output is reduced to zero within 90 seconds, thus preventing thermal runaway.

Films coated with polypyrrole can be used as microwave absorbing composites to heat as well as brown and crisp food. The microwave absorbing composite can be in the form of a tape having a layer of pressure sensitive adhesive so that it can be applied to a substrate, such as a lidding film or a popcorn package. Alternatively, the pyrrole solution can be pattern coated to precisely place a desired configuration on a substrate, such as by printing the pyrrole solution onto a lidding film for a microwave vent. Coated films made by the method of the invention are also useful for providing anti-static properties. Three-dimensional articles (such as containers) can be coated with a layer of polypyrrole by the method of this invention.

The following, non-limiting, examples will further illustrate this invention. The following test procedures were used to evaluate the articles of this invention.

## Test Procedures

## Peel Adhesion

A 0.127 cm by 5.08 cm piece of Magic Tape™, available from Minnesota Mining and Manufacturing Company, was applied to the coating with hand pressure so that at least 2.54 cm of the tape was in contact with the coating. The tape was pulled rapidly from the coating and inspected visually. "Pass" indicates that no particles were pulled off with the tape. "Marginal" indicates that some small flakes were pulled off with the tape. "Fail" indicates consistent pulling off of the coating onto the tape.

## Conductivity

Conductivity was measured with a Delcom Conductance Monitor available from Delcom Instruments, Inc., St. Paul Park, Minnesota.

## Optical Density

Optical density was measured with a Macbeth Densitometer, Model TD-931, available from Macbeth Corporation, Newburgh, New York.

## Calorimetry Method

This test measured the relative heat output of various microwave absorbing composites. The test was based on solid/liquid calorimetry and the equation for conservation of thermal energy:

$dQ/dt = mC_p dT/dt$

where:

m = mass of the heat transfer liquid

Cp = specific heat of the heat transfer liquid

dT = temperature increase of the heat transfer liquid during the time (dt) of heating the microwave absorbing composite

dQ/dt = heat output of the microwave absorbing composite sample

The process used a heat transfer liquid that was substantially transparent to microwave energy, and by itself, is heated only minimally when subjected to microwave energy. The liquid preferably had a high specific gravity (about 1.5 or greater), a low specific heat (lower than about 0.5 cal/g-°C), and a low viscosity (less than 5 cps). During heating of a microwave absorbing composite sample in the liquid in a microwave oven, the surface temperature of the microwave absorbing composite sample should remain less than 10°C above the temperature of the heat transfer liquid so that the microwave absorbing composite sample does not degrade during heating. A preferred heat transfer liquid for this test has the trademark Fluorinert™ FC-43 (available from Minnesota Mining and Manufacturing Company). Fluorinert™ FC-43 liquid has a specific gravity of 2.0, a specific heat of 0.25 cal/g-°C, and a viscosity of about 1 cps. Preferably, the heat transfer fluid is placed in an insulating container to minimize heat loss.

A microwave absorbing composite sample 3.175 cm in diameter was adhered to the bottom of a first 160 ml foamed polystyrene cup by means of a double-coated tape (Y-4482, available from Minnesota Mining and Manufacturing Company). The cup was filled with 50 g of Fluorinert™ FC-43 liquid, and the initial temperature of the liquid was measured with a thermocouple. The cup was placed in the center of a 700 watt microwave oven, and a second 160 ml foamed polystyrene cup filled with 100 g of water (at room temperature, i.e., about 20°C) was placed in a corner of the microwave oven to serve as a dielectric load for the magnetron unit. The microwave oven was turned on for 60 seconds at full power. The cup containing the microwave absorbing composite sample was then removed from the oven and the heat transfer liquid stirred with the thermocouple to determine the final temperature, and the difference between the initial and final temperatures of the heat transfer liquid was recorded. The background heating effect of the heat transfer liquid itself, i.e., the temperature increase when 50 g of heat transfer liquid was heated without a microwave absorbing composite sample, was then subtracted from the temperature rise when the microwave absorbing composite sample was heated, and the heat output of the microwave absorbing composite is calculated as described above. For Fluorinert™ FC-43 liquid, the background heating brought about an increase in temperature of 2.4°C in the liquid.

Microwave Absorbing Composite Heat Aging

This test measured the change in microwave absorbing composite heat output during microwave heating as a function of time. Two 15.24 cm square by 0.635 cm thick quartz glass plates were placed one on top of the other in a microwave oven. The bottom plate was placed on 0.635 cm thick polycarbonate shims. A microwave absorbing composite sample 3.175 cm in diameter was placed on the center of the bottom glass plate and the glass plate was placed over the sample. A first sample was heated for five seconds, a second sample was heated for 15 seconds, and third, fourth, fifth, and sixth samples were heated for 30, 60, 120, and 240 seconds, respectively, while positioned between the glass plates as described previously. The heat output of each of the preconditioned microwave absorbing composite samples was then determined by the calorimetry method described previously.

Example 1

Onto the polyester surface of a "Scotchpak" 115 film, available from Minnesota Mining and Manufacturing Company, was roll coated a layer of molten microcrystalline wax (Victory Amber, available from Petrolite Corp.), and the construction was allowed to cool. The coating weight of the wax was about two grains per 24 sq. in. (8.4 grams per square meter). "Scotchpak" 115 film is a two-layer film consisting of a layer of polyester (12.5 micrometers thick) and ethylene/vinyl acetate copolymer (25 micrometers thick).

The wax-coated surface was then placed in contact with the surface of a pulpboard sheet and passed through squeeze rolls at a temperature of 55°C, thereby laminating the polyester layer/heat-sealable layer composite to the pulpboard while leaving one surface of the heat-sealable layer exposed. The resultant innerseal construction was then slit to suitable widths, from which circular discs, corresponding to the inner diameter of screw-on lids, were die-cut. A suitable adhesive was then employed, in a conventional manner, to bond the pulpboard face of one of these discs to the inner surface of the screw-on cap for a polyethylene bottle.

The lid was screwed onto the polyethylene bottle using appropriate torque. The layer of ethylene/vinyl acetate copolymer was in contact with the polyethylene bottle. The bottle was then passed through a field of microwave energy adjacent the lid for about four seconds, which was sufficient to bond the heat-sealable layer to the lip of the bottle, simultaneously melting the layer of wax, which diffused into the pulpboard and weakened the bond between the polyester layer and pulpboard. The field of microwave energy was produced by the apparatus described in U.S. Patent No. 4,839,494.

Example 2

A polystyrene foam (0.020 inch thick, available from Astro-Valcour, Inc.) was laminated to a sheet of paper (6930 Black, available from Bemis-Jason Corp.) by means of laminating adhesive (CV 791, available from Borden Chemical Co.). The adhesive was coated at a dry coating weight of about 3 grains/24 sq. in. A polyethylene film (0.001inch thick), made by extruding "Tenite" 1550P low density polyethylene resin, available from Eastman Chemical Company, was laminated by heat to the paper sheet. The innerseal was die cut, applied to a container, and sealed in the same manner as described in Example 1. The layer of polyethylene was in contact with the polyethylene bottle.

Example 3

A solution containing 40 g of ferric tosylate in 100 ml of methanol was cooled to about -78°C in a bath of dry ice and methanol. Pyrrole (3 ml) was added to the cooled solution. Approximately 3 ml of the solution were spread quickly on a corona-treated polyester film (100 micrometer thick by 15.2 cm wide by 30.5 cm long) with a hard rubber hand roller. The film had been corona-treated in a nitrogen atmosphere at an energy level of 1.7 Joules/cm$^2$. After about 20 seconds, the wet yellow coating had solidified to a green/gray crust. After 60 seconds, the excess material was removed by washing with water, and the coating was dried in air. The resulting transparent coating of polypyrrole tosylate had a thickness of 0.048 micrometers. The coating had a surface resistivity of 2500 ohms/square and a bulk conductivity of 82.5 S/cm.

A web for preparing innerseals was made by laminating the polyester side of the resulting film to a heat-sealable film made of ethylene/vinyl acetate copolymer. The innerseal was die cut, applied to a container, and sealed to the container in the same manner as described in Example 1. The film of ethylene/vinyl acetate copolymer was in contact with the polyethylene bottle.

Example 4

The pyrrole solution of Example 3 was coated onto a corona-treated polypropylene film (51 micrometers thick by 15.2 cm wide by 30.5 cm long). The polypropylene film had been treated at an energy level of 1.7 Joules/cm$^2$ in a nitrogen atmosphere. The coating was allowed to solidify, the solidified coating was washed with water, and the washed coating allowed to dry. The coating adhered well to the polypropylene film and passed the peel adhesion test. The coating had a surface resistivity of 1500 ohms/square.

An innerseal was made and sealed in the same manner described in Example 3.

Example 5

The pyrrole solution of Example 3 was coated onto a corona-treated low density polyethylene film (51 micrometers thick by 15.2 cm wide by 30.5 cm long). The film had been corona-treated at an energy level of 1.7 Joules/cm$^2$. The coating was allowed to solidify, the solidified coating was washed with water, and the washed coating allowed to dry. The coating passed the peel adhesion test and had a surface resistivity of 1600 ohms/square.

An innerseal was made and sealed in the same manner as described in Example 3.

Comparative Example A

A sample was prepared in the same manner as was used in Example 5, except that the polyethylene film was not corona treated. The coating failed the peel adhesion test.

Example 6

The pyrrole solution of Example 3 was coated onto a polyimide film (51 micrometers thick by 15.2 cm wide by 30.5 cm long). The coating was allowed to solidify, the solidified coating was washed with water, and the washed coating allowed to dry. The coating passed the peel adhesion test and had a surface resistivity of 1250 ohms/square.

An innerseal was made and heat sealed in the same manner as described in Example 3.

Example 7

On a conventional web coating apparatus equipped with a corona surface treater and a slot coating head was mounted a roll of 12-inch wide "Scotchpak" 115 heat seal film (obtained from Minnesota Mining and Manufacturing Company). A solution containing 20% by weight ferric tosylate in methanol, precooled to -78°C, was pumped through a static mixer into the coating head at a rate of 12 ml/min. Simultaneously, a solution of 10% by weight pyrrole in methanol, kept at ambient temperature, was injected into the stream, at a point just prior to the static mixer, at a flow rate of 1.2 ml/min. The flowlines, static mixer, and coating head were continuously cooled to -60°C, by means of a circulating coolant. The mixed solution was coated onto the polyester side of the "Scotchpak" 115 film at a web speed of 1.2 m/min. Just prior to passing over the coating head, the web was corona-treated at an energy level of 2.7 Joules/cm². As it moved with the web, the wet coating gradually attained ambient temperature, the solvent evaporated, and a coating of polypyrrole was formed under a crust of solidified byproducts. This process was completed within 60 seconds. The byproducts were removed by passing the surface over a cylindrical brush, continuously wetted with a spray of water, and rotated counter to the web direction. This resulted in the formation of a uniform, thin, transparent coating of polypyrrole with a surface resistivity of 3,500 ohms/square. In this continuous fashion, 30 meters of 30.5 cm wide web was coated in 20 minutes.

Innerseals can be prepared from this web and sealed to containers in the same manner as described in Example 3.

Example 8

A heat-sealable film (25.4 micrometers thick) was prepared by extruding a blend of 88% by weight medium density polyethylene and 12% by weight "Frequon" B-20 microwave energy sensitizer. The resulting film was laminated by heat to a layer of chipboard (0.254 millimeter thick). The innerseal was die cut, applied to container, and sealed in the same manner as described in Example 1. The layer of polyethylene was in contact with the polyethylene bottle.

Example 9

A sheet of polyimide film (15.2 cm by 30.5 cm and having a thickness of 50 micrometers, Kapton® polyimide film, available from E.I. DuPont de Nemours and Co.) was coated with a pyrrole coating solution according to the method described in Example 3. The coating was allowed to solidify, the solidified coating was washed with water, and the washed coating allowed to dry, as in Example 3. The surface resistivity of the coating was 1500 ohms/square. The coated sheet was cut and wrapped around a frozen egg roll (Cafe Peking brand distributed by Multinational Food Service, Marshall, MN) with the polypyrrole coated surface facing the egg roll. The wrapped egg roll was heated in a microwave oven at full power for two minutes at 600 watts. The internal temperature of the egg roll reached 96°C. After the egg roll was unwrapped, the outside of the roll was brown and crisp while the inside was moist and uniformly heated. This example demonstrates how the polypyrrole coating can be used for browning and crisping a food product in a microwave oven.

Example 10

The polypyrrole side of a coated film of the type described in Example 4 was overcoated with a pyrrole coating solution of the type described in Example 3 according to the method described in Example 3. The coating was allowed to solidify, the solidified coating was washed with water, and the washed coating allowed to dry, as in Example 3. The two layer coating passed the peel adhesion test and had a surface resistivity of 600 ohms/square.

Example 11

A spunbonded nonwoven polyester sheet (15.2 cm by 20.3 cm and having a thickness of 250 micrometers, Reemay® #60943, available from Reemay, Inc.) was coated with a pyrrole coating solution of the type described in Example 3 according to the method described in Example 3. The coating was allowed to solidify, the solidified coating was washed with water, and the washed coating allowed to dry, as in Example 3. The reverse side of the polyester sheet was also coated with a pyrrole coating solution of the type described in Example 3 according to the method described in Example 3. The coating on the reverse side was allowed to solidify, the solidified coating was washed with water, and the washed coating allowed to dry, as in Example 3. The sample had a surface resistivity of 800 ohms/square.

Examples 12-17

The samples of these examples were prepared by the procedure described in Example 7, with the following exceptions. The film used was polyethylene terephthalate (corona-treated at an energy level of 1.0 Joule/cm$^2$, the flow rate of the oxidant (ferric tosylate in methanol) was 32 ml/min, and the flow rate of the monomer solution was 8 ml/min. Various concentrations of the oxidant, various concentrations of monomer, and various web speeds were used. The values of these parameters are set forth in Table 1. The data in Table 1 show that the conductivity of the coatings can be adjusted for specific applications.

## Table I

| Example | Oxidant concentration (%) | Monomer concentration (%) | Web speed (meters/min.) | Resistivity (ohms/square) | Optical density |
|---------|---------|---------|---------|---------|---------|
| 12 | 25 | 20 | 3.6 | 1024 | 0.20 |
| 13[a] | 25 | 20 | 3.6 | 482 | 0.37 |
| 14 | 25 | 20 | 7.3 | 2381 | - |
| 15 | 15 | 10 | 7.3 | 4595 | - |
| 16 | 10 | 10 | 7.3 | $1.35 \times 10^5$ | - |
| 17 | 10 | 10 | 10.9 | $3.0 \times 10^5$ | 0.02 |

[a] This sample contained two layers of polypyrrole applied under the conditions described, one layer coated over the other.

Examples 18-19 and Comparative Example B

Polyethylene terephthalate films were coated under the conditions described in Examples 12 and 13. The coating of the sample of Example 18, which contained one coating of polypyrrole, had a surface resistivity of 2600 ohms/square, and the coating of the sample of Example 19, which contained two coatings of polypyrrole, one layer coated over the other, had a surface resistivity of 900 ohms/square. The coated films were laminated to a 400 micrometer thick SBS paperboard (available from Westvaco, Covington, Virginia) by means of a laminating adhesive (Swift #24195, available from Swift Adhesives, Downers Grove, Illinois). The polypyrrole coating was in face-to-face contact with the paperboard. The resulting laminates were placed in an oven maintained at a temperature of 93°C for 15 minutes to cure the adhesive. The samples were tested according to the test procedures for Calorimetry and Microwave Absorbing Composite Heat Aging. The heat outputs of the microwave absorbing composites are set forth in Table II. The data for Comparative Example B is also set forth in Table II. Comparative Example B was a commercially available microwave absorbing composite obtained from James River Company. The graph of FIG. 6 shows that heat outputs of the microwave absorbing composites of the present invention are relatively stable compared with the heat output of a conventional aluminum coated microwave absorbing composite. The data represented by the line designated C indicate the heat output of the microwave absorbing composite of Example 18 as a function of heat aging. The data

EP 0 461 868 A2

represented by the line designated D indicate the heat output of the microwave absorbing composite of Example 19 as a function of heat aging. The data represented by the line designated E indicate the heat output of the microwave absorbing composite of Comparative Example B as a function of heat aging.

## Table II

| Time (sec) | Heat output (cal/sec) | | |
|:---:|:---:|:---:|:---:|
| | Example 18 | Example 19 | Comparative Example B |
| 0 | 5.52 | 2.33 | 6.41 |
| 5 | - | - | 4.12 |
| 15 | 4.62 | 2.10 | 4.18 |
| 30 | 5.04 | 2.10 | 3.52 |
| 60 | 4.33 | 1.64 | 2.96 |
| 120 | - | - | 2.69 |
| 240 | 3.26 | 1.53 | 1.95 |

Examples 20-27 and Comparative Examples C, D, E, and F

Microwave absorbing composites were made according to the method described in Examples 3 and laminated to paperboard as described in Example 18. The melt temperatures of the films employed to prepare the substrates of the microwave absorbing composites were as follows:

polyethylene terephthalate 265°C
ThermX® polyester 285°C
Ultem® polyetherimide 450°C
polyimide 400°C

The heat output of the microwave absorbing composites is set forth in Table III. Comparative examples were conventional microwave absorbing composites having a layer of vapor coated aluminum on the designated film.

13

## Table III

| Ex. | Substrate | Coating | Resistivity (ohms/square) | Optical density | Heat output (cal/sec) |
|---|---|---|---|---|---|
| C | PET[a] | Aluminum | 120 | .19 | 2.45 |
| 20 | PET[a] | Polypyrrole | 1650 | .13 | 4.64 |
| 21 | PET[a] | Polypyrrole | 714 | .29 | 7.16 |
| D | ThermX® [b] | Aluminum | 83 | .47 | 6.14 |
| 22 | ThermX® [b] | Polypyrrole | 2000 | .11 | 4.01 |
| 23 | ThermX® [b] | Polypyrrole | 690 | .20 | 12.13 |
| E | Ultem® 1000 [c] | Aluminum | 172 | .16 | 3.91 |
| 24 | Ultem® 1000 [c] | Polypyrrole | 1000 | .16 | 5.74 |
| 25 | Ultem® 1000 [c] | Polypyrrole | 833 | .16 | 7.07 |
| F | Polyimide | Aluminum | 150 | .70 | 10.25 |
| 26 | Polyimide | Polypyrrole | 1400 | – | 5.78 |
| 27 | Polyimide | Polypyrrole | 350 | – | 12.02 |

[a] Polyethylene terephthalate

[b] ThermX® polyester resin was extruded to a thickness of 25 micrometers.

[c] Ultem® 1000 polyetherimide film having a thickness of 50 micrometers was obtained from General Electric Company

The films having the higher melting temperatures, i.e., ThermX®, Ultem® 1000, and polyimide, had greater stability during heating, and consequently, the microwave absorbing composites containing them exhibited higher heat outputs. The data also show that on a given substrate, the polypyrrole coating can be controlled to provide a desired heat output.

Example 28 and Comparative Example G

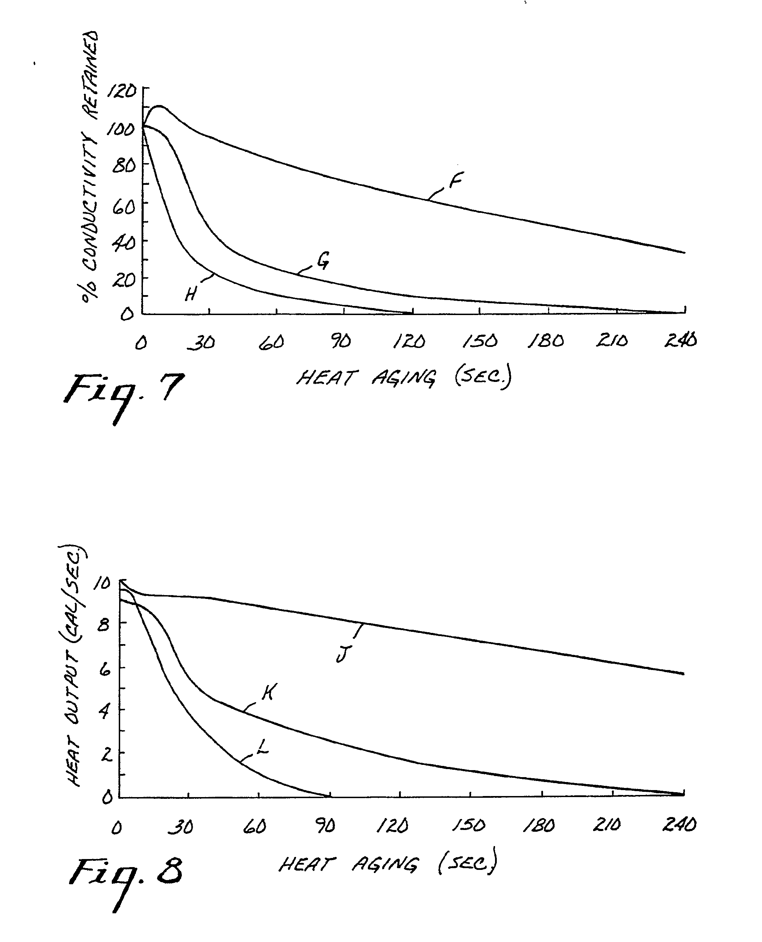

This example illustrates the conductivity and heat output characteristics of microwave absorbing

14

composites made from films bearing polypyrrole coatings upon reaching a specific ceiling temperature. Each of two sheets of polyimide film (30 cm by 60 cm and having a thickness of 50 micrometers, Kapton® polyimide film, available from E.I. DuPont de Nemours and Co.) was given two coats of the pyrrole solution of the type described in Example 3 according to the method described in Example 3 to provide a composite coating having a surface resistivity of 830 ohms/square. Each of the coated sheets was then laminated to paperboard according to the procedure described in Example 18, with the conductive surface not in face-to-face contact with paperboard. Several 3.175 cm diameter discs were cut from the laminates. The conductivity of each disc was measured, and each disc was placed with the conductive surface thereof in contact with the heating surface of a hot plate. Discs were heated for 5, 15, 30, 60, 120, and 240 seconds at temperatures of 200°C, 250°C, and 300°C, and the conductivity of each disc was measured after heating. The percentage of conductivity retained by the individual discs as a function of time and temperature is set forth in Table IV and shown graphically in FIG. 7. The data represented by the line designated F indicate the percentage of conductivity retained at 200°C by the microwave absorbing composite of this example as a function of heat aging. The data represented by the line designated G indicate the percentage of conductivity retained at 250°C by the microwave absorbing composite of this example as a function of heat aging. The data represented by the line designated H indicate the percentage of conductivity retained at 300°C by the microwave absorbing composite of this example as a'function of heat aging.

## Table IV

| | Conductivity retained after heat aging (%) | | |
|---|---|---|---|
| Time (sec) | 200°C | 250°C | 300°C |
| 0 | 100 | 100 | 100 |
| 5 | 117 | 101 | 74 |
| 15 | 102 | 90 | 39 |
| 30 | 93 | 35 | 21 |
| 60 | 80 | 25 | 8 |
| 120 | 61 | 5 | - |
| 240 | 33 | 0 | - |

The data in Table IV show that conductivity decreases rapidly at temperatures of about 250°C.

After the aforementioned heating operation, heat output from each individual disc was determined by the Calorimetry procedure. The data are set forth in Table V, and shown graphically in FIG. 8, as a function of time and temperature. The data represented by the line designated J indicate the heat output of the microwave absorbing composite of this example as a function of heat aging at 200°C. The data represented by the line designated K indicate the heat output of the microwave absorbing composite of this example as a function of heat aging at 250°C. The data represented by the line designated L indicate the heat output of the microwave absorbing composite of this example as a function of heat aging at 300°C.

## Table V

| Time (sec) | Heat output after heat aging (cal/sec) | | |
| --- | --- | --- | --- |
| | 200°C | 250°C | 300°C |
| 0 | 9.98 | 9.05 | 9.51 |
| 5 | 9.32 | 8.95 | 9.68 |
| 15 | 9.20 | 8.88 | 6.36 |
| 30 | 9.26 | 4.54 | 3.36 |
| 60 | 8.67 | 3.78 | 0.48 |
| 120 | 7.60 | 1.07 | – |
| 240 | 5.61 | 0 | – |

The data show that heat output correlates directly with conductivity retention, and, at higher temperatures, i.e., about 250°C, heat output decreases rapidly.

Comparative Example G

Comparative Example G involved a microwave absorbing composite comprising a polyimide film that had been vapor coated with aluminum. The surface resistivity was 100 ohms/square. The film was laminated to paperboard. The microwave absorbing composite of Comparative Example G did not exhibit any change in surface resistivity upon heat treatment at 250°C for five minutes. In fact, when the preconditioned sample was placed in a 600 watt microwave oven and exposed to microwave energy at full power, the sample caught on fire within a few seconds, indicating a thermal runaway reaction.

Examples 29 - 32

These examples illustrate the creation of a vent by means of microwave heating. A solution of 20% by weight of ferric tosylate in methanol (100 ml) was cooled in a dry ice/methanol bath to a temperature of about -78°C. Pyrrole (2 ml) was added to the solution and stirred. The solution was then applied by a micropipette in circles of varying diameters on the center of the polyester side of 15 cm by 20 cm sheets of Scotchpak™ #5 film (available from Minnesota Mining and Manufacturing Company), washed, and dried. The diameters of the circle are set forth in Table VI. A pouch was formed by heat sealing a second Scotchpak™ #5 film to the first. Only three edges were sealed, thereby leaving an opening for insertion of a folded 20.5 cm by 30.5 cm paper napkin and 50 ml of water. The open end of the pouch was then heat sealed and the pouch was heated in a 600 watt microwave oven at full power for two minutes. In all of the examples, the area of the Scotchpak™ #5 film under the circle of polypyrrole softened and the force of the steam building up inside of the pouch created a small vent opening. The opening was controlled in size and was sufficiently large to allow venting of the package. These examples show that the pyrrole solution can be precisely placed on a package in a specific configuration, to bring about venting during microwave heating, if desirable. The configuration of the vent can also be varied and controlled because the pyrrole solution can be printed onto the film.

## Table VI

| Example | Diameter of circle (cm) | Optical density | Time before venting (sec) |
|---------|-------------------------|-----------------|---------------------------|
| 29 | 2.22 | 0.36 | 40 |
| 30 | 1.59 | 0.30 | 50 |
| 31 | 1.90 | 0.26 | 55 |
| 32 | 1.90 | 0.20 | 55 |

Example 33

The polyester surface of Scotchpak™ #113 heat sealable polyester lidding film (available from Minnesota Mining and Manufacturing Company) was corona-treated and then coated with the pyrrole solution of the type described in Example 29 in a pattern consisting of circular spots about 0.9 cm in diameter. The spots were positioned in the center of the 15.2 cm wide film and located about 30 cm apart along the length of the roll of film.

A piece of the coated film was cut and heat sealed to the lip of a round polypropylene bowl 12.7 cm in diameter and 3.8 cm high (available from Rampart Packaging, Inc.) so that the coated spot was located approximately over the center of the bowl. The bowl contained one-quarter of a Scott WypAll brand paper towel (Scott Paper Company) saturated with 20 ml of tap water. The polypyrrole spot was located at the center of the lidding film. The bowl was then heated in a 500 watt microwave oven at full power for about two minutes. After about one minute, the steam pressure generated within the bowl formed a vent in the lidding film in the area of the coated spot.

Example 34

A tape was prepared by coating a Scotchpak™ #5 (available from Minnesota Mining and Manufacturing Company) with the pyrrole solution of the type described in Example 29 in the manner described in Example 12. To the side of the film bearing the coating was applied a layer of pressure-sensitive adhesive (PSA #48803, available from Swift Adhesives) at a coating weight of 22 g/m². A pouch containing a damp paper towel was prepared as in Example 29. A 1.59 cm diameter circle was cut from the aforementioned tape and applied to the center of one panel of the pouch. After the pouch had been heated at full power in a 600 watt microwave oven for about 60 seconds, the tape formed a vent in the pouch in the area of the tape.

Example 35 and Comparative Example H

Two microwave popcorn bags as described in U.S. Patent No. 4,450,180, incorporated herein by reference, were constructed with 10.8 cm square microwave absorbing composite patches laminated to the inside bottom center of the bags with Swift #24139 adhesive, available from Swift Adhesives. The bag of Example 35 used a microwave absorbing composite prepared according to the method described in Example 12; the bag of Comparative Example H used a conventional microwave absorbing composite prepared by vapor coating aluminum on polyester film. Equal amounts of popcorn, oil, and salt were placed in each bag and the ends were sealed. The bags, one at a time, were heated in a 450 watt microwave oven for four minutes at full power. The bags were then opened and the volume of popcorn was measured. The results indicate that the bag having the microwave absorbing composite of this invention yielded 5% more popcorn than did the bag having the microwave absorbing composite of Comparative Example H.

Example 36

A roll of 100 micrometer thick poly(ethylene-co-acrylic acid) hot melt adhesive (DAF 916, available from Dow Chemical Company) was coated as in Example 12 to provide a surface resistivity of 2500 ohms/square. Two 2.54 cm by 10.2 cm sheets of the adhesive, with the coated sides in contact with each other, were placed between two pieces of 2.54 cm by 15.2 cm by 1.27 cm thick plywood. The composite was held together with a rubber band and heated at full power in a 600 watt microwave oven for three minutes. After the composite had cooled for about five minutes, the two pieces of plywood could not be separated by hand.

Various modifications and alterations of this invention will become apparent to those skilled in the art without departing from the scope and spirit of this invention, and it should be understood that this invention is not to be unduly limited to the illustrative embodiments set forth herein.

## Claims

1. Innerseal for a container comprising from top to bottom:
   (a) a layer formed of material capable of absorbing microwave energy, converting that energy to heat, and transferring that energy to a layer of polymeric material capable of being heat-sealed to a container; and
   (b) a layer of polymeric material capable of being heat-sealed to a container.

2. The innerseal of Claim 1, wherein said innerseal further comprises a layer of polymeric material interposed between said layer capable of absorbing micro-wave energy, converting that energy to heat, and transferring that energy to a layer of polymeric material capable of being heat-sealed to a container, and said layer capable of being heat-sealed to a container.

3. The innerseal of Claim 1, wherein said layer of material capable of absorbing microwave energy, converting that energy to heat, and transferring that energy to a layer of polymeric material capable of being heat-sealed to a container, is selected from the group consisting of pulpboard, chipboard, paper, carbon-black loaded pulpboard, carbon-black loaded paper, and polymeric film bearing vapor-deposited aluminum.

4. The innerseal of Claim 1, wherein said layer of material capable of being heat-sealed to a container is selected from the group consisting of low density polyethylene, linear low density polyethylene, medium density polyethylene, ethylene/vinyl acetate copolymer, and heat-s-ealable polyesters.

5. Innerseal according to any one of claims 1 to 4 for a container further comprising from top to bottom at least one of
   (a) a layer of polymeric film or foam;
   (b) a layer of wax.

6. The innerseal of Claim 5, wherein said wax is selected from the group consisting of paraffin wax, microcrystalline wax, and low tack, low molecular weight adhesives.

7. The innerdeal of either of Claims 5 and 6, wherein said polymeric film mis made from material selected from the group consisting of polyesters, polyamides, polyimides, and polycarbonates.

8. The innerseal of any one of Claims 1 to 7, wherein said layer of polymer material capable of being heat-sealed to a container further includes a microwave energy sensitizer.

9. Innerseal accprding to any one of Claims 1 to 8, wherein the lyer (a) is a liner.

10. The innerseal of Claim 9, wherein said liner is made from paper sheet.

11. An innerseal according to any one of Claims 1 to 10 with a polymeric film above the layer of polymeric material.

12. A Method of forming a layer of polymeric material capable of absorbing microwave energy and converting said energy to heat, comprising the steps of:
    (1) providing a solution of an oxidant/dopant in an organic solvent or in an aqueous organic solvent;
    (2) cooling said solution sufficiently to prevent a monomer for preparing said polymeric material from polymerizing prior to its being coated on said substrate;
    (3) adding said monome to said oxidant/dopant solution;
    (4) coating the solution formed in step (3) an at least one major surface of said substrate;
    (5) allowing the coated solution of step (4) to warm to ambient temperature, whereby said monomer polymerizes; ambient temperature, whereby said monomer polymerizes;

(6) rinsing said polymeric coating with water; and

(7) allowing said polymeric coating to dry.

13. The method of Claim 12, werein said monomer is pyrrole.

14. The method of either of Claims 12 and 13, wherein oxidant/dopant is a salt of cationic oxidant in combination with a non-nucleophilic anion.

15. The method of any one of Claims 12 to 14, wherein said solution is cooled to a temperature of at least -40°C or lower.

16. A microwave absorbing composite capable of absorbing microwave energy comprising a substrate selected from the group consisting of polymeric films, woven materials, glass, and ceramics, said substrate bearing a layer of polyrrole on at least one major surface thereof.

17. The microwave absorbing composite of Claim 16, wherein said substrate is a polymeric film.

18. The microwave absorbing composite of Claim 17, wherein said substrate is a hot melt adhesive.

19. The microwave absorbing composite of Claim 16, wherein said substrate is selected from the group consisting of polyesters, polyimides, polyetherimides, and polyolefins.

20. A tape capable of absorbing microwave energy comprising a backing bearing on at least one major surface thereof a layer of polypyrrole, further on at least one major surface thereof a layer of adhesive.

21. The tape of Claim 37, wherein said adhesive is a pressure-sensitive adhesive or a hot-melt adhesive.

22. A container having a portion capable of being vented upon being exposed to a sufficient amount of microwave energy, said portion ising a layer of polypyrrole.

23. The container of Claim 22, wherein said container has a lid, said portion capable of being vented being disposed on a surface of said lid.

24. The container of Claim 23, wherein said lid is made of polymeric film.

25. The container of Claim 24, wherein said container is a pouch, said portion capable of being vented being disposed on a surface of said pouch.

Fig. 1

Fig. 3

Fig. 2

Fig. 4

Fig.5

Fig.6

Fig. 7

Fig. 8